# FASCICULE DE BREVET EUROPEEN

(11) **EP 2 927 271 B1**
(45) Date de publication et mention de la délivrance du brevet: **20.07.2016**
(21) Numéro de dépôt: 15160312.3
(22) Date de dépôt: 23.03.2015
(51) Int. Cl.: C08K 3/22, C09D 133/16

(54) **COMPOSITION PHOTOCATALYTIQUE AQUEUSE.**
WÄSSRIGE FOTOKATALYTISCHE ZUSAMMENSETZUNG
AQUEOUS PHOTOCATALYTIC COMPOSITION

(30) Priorité: 03.04.2014 FR 1452950
(43) Date de publication de la demande: 07.10.2015
(73) Titulaire: Guard Industrie, 93108 Montreuil (FR); LRVision, 31320 Castanet Tolosan (FR)
(72) Inventeur: Wayser, Barnabé, 75008 Paris (FR); Lemaire, Guillaume, 31190 Auterive (FR)
(74) Mandataire: Gevers & Orès

(56) Documents cités:
- EP-A1- 2 692 439
- JP-A- 2006 233 072

## Description

La présente invention concerne une composition photocatalytique aqueuse, pouvant être utilisée aussi bien en intérieur qu'en extérieur. La composition photocatalytique de la présente invention est particulièrement appropriée à être utilisée en imprégnation de surfaces de bâtiments et constructions.

On connaît déjà de nombreuses compositions photocatalytiques aqueuses comportant au moins un agent photocatalyseur, tel que Ti0₂, Zn0, Ce0₂, Zn0₂, Sn0₂, CdS, ZnS,...et présentant un pouvoir anti-polluant du fait de la photocatalyse activée par l'action de radiations ultraviolettes sur lesdits agents photocatalyseurs. Aussi, de telles compositions photocatalytiques aqueuses peuvent-elles être appliquées sur des surfaces, par exemple de constructions, pour les protéger contre les effets de la pollution ambiante.

Toutefois, les compositions photocatalytiques aqueuses connues présentent l'inconvénient que leur pouvoir anti-pollution est rapidement amoindri par des dépôts, notamment des dépôts de composés carbonés (matières grasses, suie, microorganismes, etc...), qui se forment sur les surfaces qu'elles protègent. En effet, ces dépôts font écran aux radiations ultra-violettes utiles, de sorte que la photocatalyse ne peut se produire pleinement.

Une telle réduction d'efficacité des compositions photocatalytiques est particulièrement importante lorsque des mousses ou des algues se déposent sur lesdites surfaces, car alors la croissance de ces dernières est généralement plus rapide que leur élimination par les agents photocatalyseurs.

Par ailleurs, ces compositions photocatalytiques connues n'ont pratiquement aucun pouvoir anti-pollution dans les lieux (notamment en intérieur) où la quantité de radiations ultra-violettes utiles est faible, du fait que le peu de photocatalyse qui pourrait se produire avec cette faible quantité de radiations ultra-violettes est encore réduite par lesdits dépôts.

La présente invention a pour objet de remédier à ces inconvénients en permettant à une composition photocatalytique aqueuse d'imprégnation d'être peu sensible à de tels dépôts, de façon à pouvoir être utilisée de façon optimale aussi bien sur des surfaces extérieures exposées aux intempéries, que sur des surfaces disposées à l'intérieur de constructions.

A cette fin, selon l'invention, la composition photocatalytique aqueuse comportant au moins un agent photocatalyseur, ladite composition photocatalytique étant destinée à être utilisée en imprégnation sur une surface à protéger de la pollution ambiante, est remarquable en ce qu'elle comporte au moins un fluoropolymère contenant au moins un radical acrylate pour excercer une protection hydrophobe et lipophobe de ladite surface favorisant le pouvoir antipollution dudit agent photocatalyseur, ce dernier en retour protégeant ledit fluoropolymère contre les radiations ultraviolettes.

Ainsi, grâce audit fluoropolymère, la composition photocatalytique aqueuse de l'invention exerce une protection hydrophobe et lipophobe de la surface sur laquelle elle est appliquée permettant de limiter la vitesse de développement sur celle-ci des dépôts de composés organiques, de sorte que l'épaisseur et l'opacité de ces dépôts reste faible permettant à l'agent photocatalyseur de détruire ces derniers. De plus, l'agent photocatalyseur protège le fluoropolymère contre les radiations ultra-violettes tendant à le dégrader.

On obtient ainsi un effet de synergie permettant à la composition photocatalytique aqueuse de l'invention d'exercer une action photocatalytique optimale.

On remarquera de plus que, grâce au radical acrylate, la composition photocatalytique présente un excellent pouvoir d'accrochage sur la surface sur laquelle elle est appliquée.

Ainsi, dans la composition photocatalytique aqueuse de la présente invention, le fluoropolymère est protégé des radiations ultra-violettes par l'agent photocatalyseur, alors que celui-ci est fixé et nettoyé par ledit fluoropolymère.

Dans la composition photocatalytique aqueuse conforme à la présente invention :
- l'agent photocatalyseur peut être l'un quelconque ou un mélange des oxydes ou sulfures connus pour avoir des propriétés photocatalytiques. Toutefois, pour des raisons économiques, il est préférable d'utiliser du dioxyde de titane anatase, éventuellement mélangé à du dioxyde de titane rutile. D'excellents résultats ont été obtenus avec un sol aqueux de nano-particules d'oxyde de titane connu commercialement sous le nom S5-300B de la société Millenium Inorganic Chemicals, ou bien avec des sols de dioxyde de titane connus commercialement sous les noms LS101 et LS102 de la société Lotus Synthesis ; et
- le fluoropolymère peut être un polymère acrylate fluoré tel que ceux connus commercialement sous les noms Lineplus PDM 210 et Hexafor 6210 de la société Guarniflon et PM1690 et PM5000 de la société 3M.

La composition photocatalytique aqueuse de l'invention contient, de préférence, de 5 à 10% en masse du fluoropolymère à radical acrylate et au plus 2% en masse d'agent photocatalytiseur, le reste étant formé par de l'eau, contenant éventuellement des solvants tels que la diéthylamine, le ter-butanol ou l'acide acétique.

On remarquera que, du fait de sa faible concentration en fluoropolymère et en agent photocatalyseur, la composition photocatalytique aqueuse conforme à la présente invention peut facilement s'imprégner dans une surface de construction et donc être appliquée jusqu'à saturation, sans que se produise un film blanchâtre superficiel. Cette composition peut être appliquée jusqu'à 180g/m², de préférence en deux passes, alors que les produits photocatalytiques connus sont généralement appliqués à raison de 40g/m². Il en résulte que ladite surface ainsi imprégnée de la composition photocatalytique aqueuse devient hydrofuge, en limitant la pénétration d'agents véhiculés par l'eau, et autonettoyante.

De plus, une telle surface imprégnée est apte à dégrader les composés organiques volatiles, tels que le benzène, le toluène, l'éthylbenzène et le xylène, et des oxydes gazeux, tels que les oxydes d'azote et les oxydes de soufre, ce qui permet de dépolluer l'air au contact de ladite surface. Une telle action de dépollution est particulièrement appréciable en intérieur.

Eventuellement, la composition photocatalytique aqueuse de la présente invention peut être colorée, à l'aide de pigments naturels ou synthétiques.

A toutes fins utiles, on remarquera que :
- le document EP 2 692 439 A1 décrit une composition photocatalytique apte à former des films solides sur des surfaces et comportant une résine acrylique servant de liant. L'objet de ce document est d'intégrer de l'oxyde cuivreux à l'agent photocatalytique. Ladite résine acrylique peut ou non comporter des groupes fluoroalkyl ; et
- le document JP 2006 233072 concerne un revêtement photocatalytique et son objet principal est d'incorporer un oxyde métallique poreux à l'agent photocatalytique.

## Revendications

1. Composition photocatalytique aqueuse comportant au moins un agent photocatalyseur, ladite composition photocatalytique étant destinée à être utilisée en imprégnation sur une surface à protéger de la pollution ambiante,
**caractérisée en ce qu'**elle comporte au moins un fluoropolymère contenant au moins un radical acrylate pour exercer une protection hydrophobe et lipophobe de ladite surface favorisant le pouvoir antipollution dudit agent photocatalyseur, ce dernier, en retour, protégeant ledit fluoropolymère contre les radiations ultraviolettes.

2. Composition photocatalytique aqueuse selon la revendication 1,
**caractérisée en ce que** ledit agent photocatalyseur contient au moins du dioxyde de titane.

3. Composition photocatalytique aqueuse selon l'une des revendications 1 ou 2,
**caractérisée en ce que** la proportion en masse dudit fluoropolymère à radical acrylate est comprise entre 5 et 10%.

4. Composition photocatalytique aqueuse selon l'une des revendications 1 à 3,
**caractérisée en ce que** la proportion en masse dudit agent photocatalyseur est au plus de 2%.

5. Composition photocatalytique aqueuse selon l'une des revendications 1 à 4,
**caractérisée en ce qu'**elle est colorée à l'aide de pigments naturels ou synthétiques.

## Patentansprüche

1. Wässrige, photokatalytische Zusammensetzung, die mindestens ein Photokatalysatormittel umfasst, wobei die photokatalytische Zusammensetzung dazu bestimmt ist, als Imprägnierung auf eine Oberfläche verwendet zu werden, um vor Verschmutzung durch die Umgebung zu schützen,
**dadurch gekennzeichnet, dass** sie mindestens ein Fluorpolymer umfasst, das mindestens ein Acrylatradikal enthält, um einen hydrophoben und lipophoben Schutz der Oberfläche auszuüben, welcher die Antischmutzfähigkeit des Photokatalysatormittels begünstigt, wobei das letztere wiederum das Fluorpolymer vor ultravioletter Strahlung schützt.

2. Wässrige, photokatalytische Zusammensetzung nach Anspruch 1,
**dadurch gekennzeichnet, dass** das Photokatalysatormittel mindestens Titandioxid enthält.

3. Wässrige, photokatalytische Zusammensetzung nach einem der Ansprüche 1 oder 2,
**dadurch gekennzeichnet, dass** der Massenanteil des Fluorpolymers zu Acrylatradikal zwischen 5 und 10 % liegt.

4. Wässrige, photokatalytische Zusammensetzung nach einem der Ansprüche 1 bis 3,
**dadurch gekennzeichnet, dass** der Massenanteil des Photokatalysators höchstens 2 % beträgt.

5. Wässrige, photokatalytische Zusammensetzung nach einem der Ansprüche 1 bis 4,
**dadurch gekennzeichnet, dass** sie mit Hilfe von natürlichen oder synthetischen Pigmenten gefärbt ist.

## Claims

1. Aqueous photocatalytic composition comprising at least one photocatalyst agent, said photocatalytic composition being intended to be used in impregnation on a surface to be protected from ambient pollution, **characterised in that** it comprises at least one fluoropolymer containing at least one acrylate radical in order to exert a hydrophobic and lipophobic protection of said surface favouring the antipollution power of said photocatalyst agent, with the latter, in return, protecting said fluoropolymer from ultraviolet radiation.

2. Aqueous photocatalytic composition according to claim 1, **characterised in that** said photocatalyst agent contains at least titanium dioxide.

3. Aqueous photocatalytic composition according to one of claims 1 or 2,
**characterised in that** the proportion in mass of said fluoropolymer with acrylate radical is between 5 and 10%.

4. Aqueous photocatalytic composition according to one of claims 1 to 3,
**characterised in that** the proportion in mass of said photocatalyst agent is at most 2%.

5. Aqueous photocatalytic composition according to one of claims 1 to 4,
**characterised in that** it is coloured using natural or synthetic pigments.
